# EUROPÄISCHE PATENTSCHRIFT

(11) **EP 1 984 660 B1**
(45) Veröffentlichungstag und Bekanntmachung des Hinweises auf die Patenterteilung: **07.04.2010**
(21) Anmeldenummer: 07702870.2
(22) Anmeldetag: 18.01.2007
(51) Int. Cl.: F16J 15/08, F16J 15/12

(54) **FLACHDICHTUNG MIT AUFGEKLEBTEM BZW. EINGESETZTEM FUNKTIONSELEMENT FÜR BRENNKRAFTMASCHINE**
FLAT SEAL WITH ADHESIVELY BONDED OR INSERTED FUNCTIONAL ELEMENT FOR INTERNAL COMBUSTION ENGINE
JOINT D'ÉTANCHÉITÉ PLAT POURVU D'UN ÉLÉMENT FONCTIONNEL COLLÉ OU INTRODUIT POUR UN MOTEUR À COMBUSTION INTERNE

(30) Priorität: 16.02.2006 DE 102006007313
(43) Veröffentlichungstag der Anmeldung: 29.10.2008
(73) Patentinhaber: Federal-Mogul Sealing Systems Bretten GmbH, 75015 Bretten (DE)
(72) Erfinder: SALAMEH, Ralf, 75053 Gondelsheim (DE)
(74) Vertreter: Kurig, Thomas
(86) Internationale Anmeldenummer: PCT/EP2007/000437
(87) Internationale Veröffentlichungsnummer: WO 2007/093267

(56) Entgegenhaltungen:
- EP-A1- 0 852 309
- EP-A2- 1 033 511
- DE-A1- 4 222 734
- GB-A- 2 169 362
- JP-A- 9 317 890
- US-A- 3 191 950
- US-A- 3 794 333
- US-A1- 2004 173 974

## Beschreibung

### Technisches Gebiet

Die vorliegende Erfindung betrifft eine Flachdichtung für hohe Beanspruchung, die einen bevorzugt elastomerbeschichteten Metallträger umfasst, insbesondere für Brennkraftmaschinen. Bauartbedingt sind Flachdichtungen hohen Belastungen durch Verpressungskräfte und Relativbewegungen ausgesetzt, was zu einer starken Abnutzung der Flachdichtung und schließlich zu einem Versagen der Dichtung führen, kann. Durch Aufkleben oder Einsetzen eines entlastenden Funktionselements in besonders kritischen Bereichen der Dichtung sollen diese Verschleißerscheinungen verringert werden.

### Stand der Technik

Es gibt mehrere verschiedene Grundarten von Flachdichtungen. Dazu gehören zum Beispiel die meist als Papierdichtungen bezeichneten Dichtungen, oder Dichtungen mit metallischem Blechkem und einer Elastomerbeschichtung, die zur Pressungserhöhung normalerweise gesickt sind. Eine weitere mögliche Ausführungsform ist beispielsweise die im Patent EP 1023549 B1 beschriebene Flachdichtung, bei der ein Blechkern mit einer elastomeren Beschichtung und Dichtlippen versehen wird.

Die US 3,191,950 offenbart eine Dichtung, die ein einfaches Verstärkungselement mit gegenüberliegenden Flächen, die nicht gerillt sein müssen, eine Hülle aus elastomerem Material, die zumindest im Wesentlichen das Verstärkungselement umschließt und zwei elastomere Schichten bereitstellt, die jeweils auf gegenüberliegenden Seiten des Verstärkungselements angeordnet sind, eine erhabene Dichtrippe, die mit zumindest einer der elastomeren Schichten einstückig ist und über die Oberfläche davon vorragt, und mindestens einen Kanal in einer elastomeren Schicht einschließt, entlang der und parallel zu der Dichtrippe, wobei beim Klemmen der Dichtung zwischen zwei gegenüberliegenden zusammenpassenden abzudichtenden Flächen die Dichtrippe elastisch in einen solchen Kanal verformbar ist.

Die GB 2 169 362 betrifft eine Zylinderkopfdichtung mit mindestens einer Brennraum-Durchgangsöffnung, welche ein beidseitig mit Weichstoffauflagen beschichtetes Trägerblech sowie ein in der Brennraum-Durchgangsöffnung liegendes, metallisches Dichtelement aufweist, wobei zur Erzielung einer ausreichenden Kompressibilität der Weichstoffauflagen Ausweichräume für den Weichstoff vorgesehen sind.

Diese Dichtungen werden in Bereichen eingesetzt, in denen keine sehr großen Bauteiltoleranzen ausgeglichen werden müssen. Die Dichtfunktion einer Flachdichtung wird durch Verpressung der Dichtung zwischen Flanschen bzw. Bauteilen erreicht. Alle diese Dichtungen haben gemeinsam, dass sie im Kraftfluss der Gehäuse oder Flanschverschraubungen liegen und somit durch die Verschraubungskräfte stark belastet werden. Diese Belastungen treten natürlich insbesondere in den Befestigungsbereichen bzw. Verschraubungsbereichen einer Flachdichtung auf, doch auch andere Umstände wie eine geringe Flanschfläche bzw. Kontaktfläche mit den Flanschen können lokal zu einer starken Überhöhung der lokalen Flächenpressung an dieser Stelle führen. Zusätzliche Faktoren, wie auftretende Verwindungen, die zu einer Relativbewegung zwischen den Gehäuseteilen (Mikrobewegungen) führen können, oder Schwingungsbelastungen durch bewegte Teile in einem Getriebe, belasten den Dichtungsverbund zusätzlich und können zu einer Überbeanspruchung des Dichtsystems führen.

Da Flachdichtungen bauartbedingt im Kraftfluss der Verschraubung zwischen den Flanschen liegen, ist die Möglichkeit einer Verringerung der Verschraubungskräfte sehr begrenzt, da sonst Probleme mit einer Reduzierung des Losbrechmoments der Schraube auftreten und sich diese lösen können. Außerdem würde ein Verringern der Verschraubungskräften und damit des Anpressdrucks wiederum dazu führen, dass die Verformungen und/oder Relativbewegungen zwischen den Flanschen verstärkt werden und so die dadurch entstehende Belastung und Abnutzung der Dichtung weiter erhöht wird. Zudem haben die Betriebsbedingungen, wie Temperaturen und Medienkontakt ebenfalls einen Einfluss auf das Material. Der durch die starke Verpressung und die Verwindungen/Relativbewegungen verursachte Verschleiß kann letztendlich zu einem vollständigen Versagen der Dichtfunktion führen.

Dies bedeutet, dass diese Dichtungen bei örtlich sehr hohen Pressungen, starken Verformungen von Gehäusebauteilen und/oder Relativbewegungen speziell bei höher beanspruchten Gehäusen mit hohen Verschraubungskräften und kleinen Flansch- oder Kontaktflächen überbeansprucht werden und nicht eingesetzt werden können. In diesen Fällen muss bisher daher eine andere, meist teurere Dichtungsbauart gewählt werden. Dies kann z.B. eine Dichtung mit metallischem Trägerrahmen sein, an dem die Dichtlippen stirnseitig anvulkanisiert sind. Bei dieser Bauart sind jedoch im Gegensatz zu einer Flachdichtung die wesentlichen Funktionen der Übertragung der Verschraubungskräfte und die Dichtfunktion voneinander getrennt.

Daher ist es die Aufgabe der Erfindung, eine Lösung für Flachdichtungen für Brennkraftmaschinen bereitzustellen, bei der die Bereiche, die durch verschiedene bauartbedingte Einflüsse stark beansprucht und abgenutzt werden, "entlastet" werden, damit die zulässigen Materialbeanspruchungsgrenzen nicht überschritten werden.

Gemäß einem Aspekt der Erfindung wird die Aufgabe durch eine Flachdichtung gelöst, die einen Metallträger umfasst, der eine Beschichtung aus einem elastomeren Material aufweist, wobei in mindestens einem vorbestimmten Bereich der Flachdichtung jeweils eine Ausnehmung gebildet ist, in der ein Funktionselement eingesetzt ist. Die Verpressungskräfte wirken damit hauptsächlich auf das Funktionselement, da die Kräfte nur seitlich an den Metallträger der Flachdichtung übertragen werden können. Der Metallträger weist mindestens eine Öffnung zur Aufnahme eines Befestigungselements auf, wobei sich das Funktionselement um die Befestigungsöffnung in einem Sektor von 60°-120°, bevorzugt 70°-110°, besonders bevorzugt 90° erstreckt, der an der Befestigungsöffnung angrenzt. Damit deckt das Funktionselement die Bereiche kritischer Belastung in der Nähe der Verschraubungsöffnungen ausreichend ab, ohne die Dichtungsbereiche auf der gegenüberliegenden Seite zu beeinflussen.

Bei einer nicht durchgehenden Ausnehmung kann das aufgeklebte Funktionselement eine Folie sein. Eine dünne Schicht aus geeignetem Material kann ausreichen, um eine Entlastung der Dichtung zu erreichen, ohne die Dicke der Flachdichtung in diesem Bereich wesentlich zu verändern.

In einer Ausführungsform sind auf beiden Seiten des metallischen Trägers symmetrisch Funktionselemente aufgeklebt. Dadurch werden die Verpressungskräfte gleichmäßiger auf die Dichtung verteilt.

Bevorzugt ist der mindestens eine Bereich, in dem das Funktionselement aufgeklebt ist, nicht mit dem elastomeren Material beschichtet. Ein Verkleben direkt mit dem Metallträger kann je nach Ausführung belastbarer sein als mit einer dazwischen liegenden Elastomerschicht.

In einer bevorzugten Ausführungsform ist das Funktionselement in der Ausnehmung eingeklebt. Dies sorgt für eine sichere Verbindung mit dem Metallträger der Dichtung. In einer weiteren bevorzugten Ausführungsform ist das Funktionselement in der Ausnehmung eingeklemmt. Dies hat den Vorteil, dass keine zusätzlichen Klebemittel nötig sind.

Es ist bevorzugt, dass das mindestens eine Funktionselement aus einem metallischen Material gebildet ist. Eine metallische Lage ist sehr widerstandsfähig und kann speziell an die starken auftretenden Kräfte angepasst werden.

Alternativ ist bevorzugt, dass das mindestens eine Funktionselement aus Kunststoff gebildet ist. Solche Elemente könnten sehr kostengünstig hergestellt werden; außerdem existieren Kunststoffe für sehr viele verschiedene Anforderungen, was die Materialeigenschaften betrifft.

Bevorzugt weisen die äußeren Oberflächen des Funktionselements eine Oberflächenstruktur auf. Diese Struktur hat den Vorteil, die Reibung der Dichtung mit den Flanschen zu erhöhen und somit auftretende Relativbewegungen zu reduzieren.

### Kurze Beschreibung der Zeichnungen

Die Erfindung wird nun ausführlicher in Verbindung mit einer Beschreibung beispielhafter Ausführungsformen und mit Hilfe der beigefügten Zeichnungen beschrieben, wobei:
Figur 1a eine perspektivische Ansicht einer Flachdichtung nach dem Stand der Technik zeigt;
Figur 1b einen Querschnitt durch den Dichtbereich einer Flachdichtung nach dem Stand der Technik zeigt
Figur 2 eine erfindungsgemäße Ausführungsform einer Flachdichtung zeigt, die im Verschraubungsbereich mit einem Funktionselement versehen ist;
Figur 3a einen Querschnitt durch eine Flachdichtung nach dem Stand der Technik zeigt;
Figur 3b im Querschnitt eine nicht erfindungsgemäße Ausführungsform einer Flachdichtung mit beidseitig aufgeklebten Funktionselementen zeigt; und
Figur 3c im Querschnitt eine erfindungsgemäße Ausführungsform mit einem eingesetzten Funktionselement zeigt.

### Ausführliche Beschreibung der Erfindung

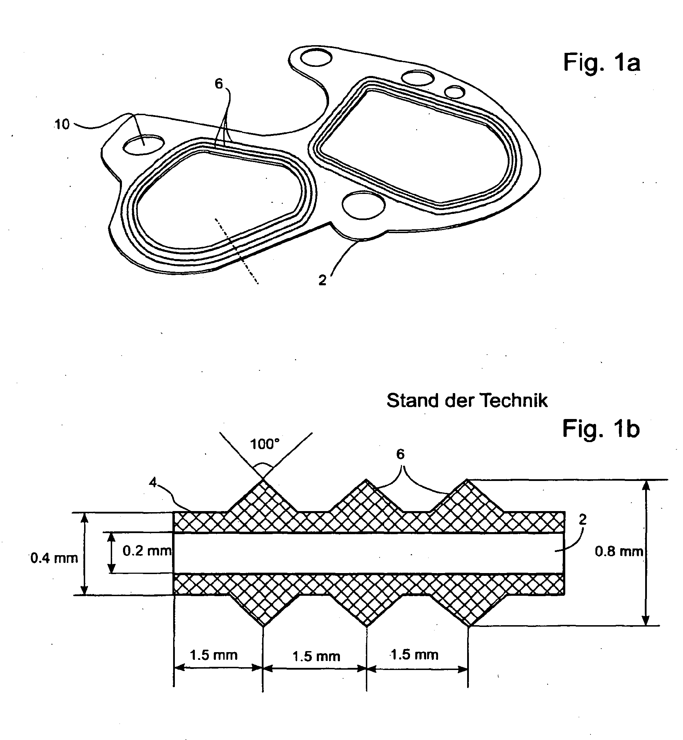

Fig. 1 zeigt eine beispielhafte Flachdichtung 1 nach dem Stand der Technik. In Fig. 1a ist eine perspektivische Ansicht zu sehen, während in Fig. 1b ein Querschnitt dargestellt ist. Die Dichtung weist einen metallischen Grundträger 2 auf und ist mit einem elastomeren Material 4 beschichtet. Aus dem elastomeren Material sind außerdem mehrere, in diesem Fall drei, parallel verlaufende Dichtlippen 6 ausgebildet. Diese weisen einen dreieckigen Querschnitt auf und verlaufen, wie in Fig. 1a gezeigt, jeweils um die gesamte Dichtöffnung herum. Die Dichtung weist Befestigungsöffnungen 10 zur Verschraubung mit anderen Bauteilen auf. Weitere Einzelheiten der Dichtung wie zusätzliche Dichtelemente, Sicken etc. sind hier nicht gezeigt, sind dem Fachmann aber bekannt. Wie in Fig. 1b gezeigt, sind beispielhafte Maße für die verschiedenen Elemente der Dichtung wie folgt: der metallische Kern 2 weist eine Dicke a von 0,2 mm auf, die Gesamtdicke x der Dichtung liegt bei 0,4 mm, so dass in diesem Beispiel auf jeder Seite eine Elastomerbeschichtung 4 von 0,1 mm Dicke aufgebracht ist. Die Dicke der Flachdichtung, gemessen bis zu den Spitzen der Dichtlippen 6, beträgt 0,8 mm. Der eingeschlossene Winkel der dreieckigen Dichtlippen 6, die jeweils 1,5 mm voneinander entfernt liegen (von Spitze zu Spitze) soll bei etwa 100° liegen. Je nach Anwendung können die Abmessungen der Flachdichtung jedoch selbstverständlich auch von diesen Werten abweichen.

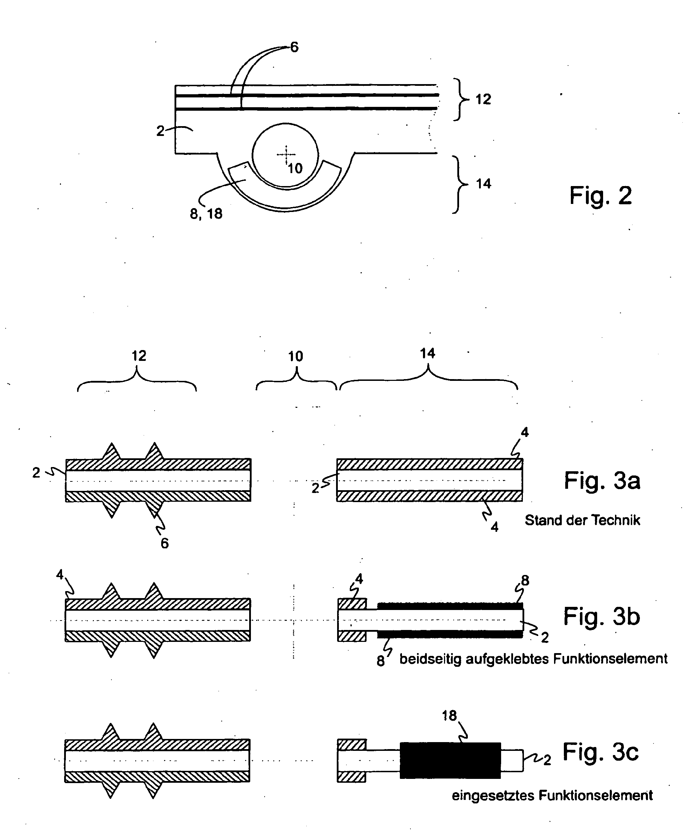

Fig. 2 zeigt einen Ausschnitt einer Flachdichtung 1 gemäß der Erfindung. Dabei ist eine Befestigungsöffnung 10 zu sehen, die zur Verschraubung der Dichtung dient. Oberhalb der Befestigungsöffnung 10 sind zwei parallel verlaufende Dichtlippen 6 dargestellt. Der Bereich 14 um die Befestigungsöffnung 10 unterliegt, wie bereits diskutiert wurde, besonders hohen Belastungen durch starke Verpressungen. Um diesen Bereich zu entlasten, wurde daher ein Funktionselement 8, 18 angebracht. Das Funktionselement kann sich über einen beliebigen Bereich 14, außerhalb des Dichtbereichs 12, erstrecken. Die in der Zeichnung gezeigte Form und Größe ist dabei nur als Beispiel anzusehen. So könnte das Funktionselement sowohl an die Form und Größe des stark belasteten Bereichs als auch zum Beispiel an Form und Größe der zur Verpressung verwendeten Schrauben angepasst werden. Die Elemente könnten für bestimmte Schraubengrößen standardisiert werden und automatisch aufgeklebt werden.

Es ergibt sich also hier ein Dichtungsverbund, der aus dem eigentlichen Blechträger sowie dem daran angebrachten Funktionselement besteht. Auf diese Weise erhält man zwei unterschiedliche Funktionsbereiche, einerseits den elastomerbeschichteten Dichtungsbereich, der auch die Dichtlippen aufweist, und andererseits einen z.B. vollständig metallischen (oder mit anderen geeigneten Materialien versehenen) Bereich. Das Ziel ist, einen Teil der durch die Verpressung und Verschraubung der Dichtung hervorgerufenen Kräfte durch das Funktionselement aufzunehmen, um die Dichtung im elastomeren Bereich nicht über die zulässigen Materialgrenzen hinaus zu verpressen. Grundsätzlich ändert sich aber durch diese so erreichte Funktionstrennung die Art der Dichtung nicht, die weiterhin zwischen den Flanschflächen verschraubt ist und im Kraftfluss liegt.

Fig. 3a zeigt einen Ausschnitt einer Flachdichtung nach dem Stand der Technik im Querschnitt. Wie auch in Fig. 2 ist ein Dichtungsbereich mit zwei Dichtlippen 6, eine Befestigungsöffnung 10 sowie ein Bereich 14 um die Befestigungsöffnung zu sehen. Der Metallträger 4 ist in allen Bereichen mit einem Elastomer beschichtet. Demgegenüber ist in Fig. 3b eine nicht erfindungsgemäße Ausführungsform und in Fig. 3c eine beispielhafte Ausführungsform nach der Erfindung gezeigt, wobei bei beiden Ausführungsformen nun in dem stark belasteten Bereich 14 auf unterschiedliche Arten entlastende Funktionselemente 8, 18 angebracht sind.

Das Anbringen dieser Funktionselemente 8, 18 kann zum Beispiel durch Aufkleben mit einem geeigneten Klebemittel erfolgen. Dabei kann ein flaches Materialstück symmetrisch von beiden Seiten aufgeklebt werden, wie es in Fig. 3b gezeigt ist. Bei einer besonderen Ausführungsform kann dies auch einseitig oder beidseitig nicht symmetrisch erfolgen. Das aufgeklebte Funktionselement 8 kann in einer für die jeweilige Anwendung geeigneten Dicke hergestellt werden und beispielsweise aus einer Metall- oder Kunststofffolie bestehen. Dabei kann wie in Fig. 3b dargestellt der Bereich des Metallträgers 2, in dem das Funktionselement 8 aufgeklebt ist, im Gegensatz zu der ansonsten beidseitig elastomerbeschichteten Dichtung unbeschichtet sein; dies könnte in Hinblick auf die Klebeeigenschaften günstiger sein.

In einer weiteren bevorzugten Ausführungsform kann das Funktionselement 18 in eine Freistanzung eingeklebt oder mechanisch fixiert werden. Eine mechanische Fixierung wird beispielsweise durch Klemmen in eine freigestanzte Ausnehmung des Metallträgers 2 erreicht, die minimal kleiner als das Funktionselement 18 ist. Ein solches in eine Ausnehmung eingesetztes Funktionselement ist in Fig. 3c gezeigt.

Alternativ könnte beispielsweise eine einseitige oder beidseitige, jedoch nicht durchgehende Stanzung/Prägung des Metallträgers 2 vorgenommen werden, in die ein Funktionselement 8, 18 eingelegt und wiederum auf geeignete Weise durch Kleben oder Klemmen fixiert wird (nicht gezeigt).

Bei beiden Varianten (aufgeklebt/eingesetzt) besteht die Möglichkeit, die Oberflächen der Funktionselemente 8, 18 zu modifizieren. Durch Anrauung oder Strukturierung der außen liegenden Oberflächen kann zusätzlich zur Aufnahme der hohen Flächenpressungen eine Erhöhung der Reibung bewirkt werden, wodurch Relativbewegungen zwischen der Dichtung 1 und den Flanschen reduziert oder verhindert werden. Eine solche Strukturierung kann zum Beispiel durch Einprägungen des Funktionselements 8, 18 erreicht werden.

Um eine effiziente Entlastung der Flachdichtung zu erreichen, kann das Material des Funktionselements 8, 18 so gewählt werden, dass es eine größere Härte und/oder höhere Verschleißfestigkeit als das Trägermaterial 2 der übrigen Dichtung aufweist. Neben Metallen und Kunststoffen, wie angesprochen, kommen auch andere Materialien für das eingesetzte oder aufgeklebte Funktionselement in Frage, wie der Fachmann erkennen wird.

Die Dicke der Funktionselemente wird so gewählt, dass die zum Abdichten der Bauteile notwendige Verpressung der Dichtung erreicht werden kann. Beim Erreichen dieser Dicke übernehmen die Funktionselemente einen großen Teil der Verschraubungskräfte und entlasten damit den Dichtungsbereich 12. Dabei kann die Dicke der Folie 8 oder des Einsatzelements 18 frei gewählt werden und auf einfache Weise ausgetauscht werden. Dies bietet beispielsweise die Möglichkeit, eine Dichtung an unterschiedliche Bedingungen anzupassen, oder bei einer Erprobung der Dichtung verschiedene Arten, Formen und Materialien von Funktionselementen zu testen, um schließlich ein geeignetes Element für eine Serienfertigung zu finden.

Die Form und Geometrie des aufgeklebten oder eingesetzten Funktionselements kann ebenso flexibel gewählt werden. Beispielsweise kann das Element so gestaltet sein, dass es exakt an die Geometrie der Dichtung und anderer Bauteile angepasst ist. Dabei kann ein solches Funktionselement an beliebigen Stellen eingesetzt werden. Es könnte in allen freien Bereichen einer Dichtung angebracht werden oder nur in den Bereichen 14 der Verschraubung. Es ist beispielsweise auch denkbar, dass ein solches Element nur an einer bestimmten Stelle angebracht wird, wo aufgrund von vorherigen Erprobungen oder Berechnungen bekannt ist, dass dort besonders starke Belastungen auftreten. Dies können wie beschrieben und in den Beispielen und Zeichnungen gezeigt die Verschraubungsbereiche sein, oder aber Bereiche, in denen zum Beispiel aufgrund von Bauteilverformungen oder beengten Platzverhältnissen eine lokal erhöhte Pressung auf die Dichtung vorliegt.

Somit ergibt sich ein flexibel einsetzbares Entwicklungstool, um lokale Spannungsspitzen, die zu einer Überbelastung und Beschädigung der Dichtung führen, abzubauen. Das zusätzlich angebrachte Funktionselement bewirkt eine lokale Funktionstrennung, da die Verpressungskräfte nun verstärkt von dem Funktionselement aufgenommen werden. Auf diese Weise erhält man eine Dichtung, die auf einfache Weise mit herkömmlichen Verfahren hergestellt werden kann und die aufgrund der erhöhten Verschleißfähigkeit nun in breiteren Anwendungsbereichen eingesetzt werden kann als bisher bekannte Flachdichtungen.

## Patentansprüche

1. Flachdichtung (1) für hohe Beanspruchung, umfassend einen Metallträger (2), der eine Beschichtung (4) aus einem elastomeren Material aufweist, wobei in mindestens einem vorbestimmten Bereich (14) der Flachdichtung jeweils eine Ausnehmung gebildet ist, in der ein Funktionselement (18) eingesetzt ist und wobei der Metallträger (2) eine Öffnung (10) zur Aufnahme eines Befestigungselements aufweist; **dadurch gekennzeichnet, dass** sich das Funktionselement (18) um die Befestigungsöffnung (10) in einem Sektor von 60°-120°, bevorzugt 70°-110°, besonders bevorzugt 90° erstreckt, der an die Befestigungsöffnung (10) angrenzt.

2. Flachdichtung (1) nach Anspruch 1, wobei das Funktionselement (18) in der Ausnehmung eingeklebt ist.

3. Flachdichtung (1) nach Anspruch 1, wobei das Funktionselement (18) in der Ausnehmung eingeklemmt ist.

4. Flachdichtung (1) nach einem der Ansprüche 1 bis 3, wobei das Funktionselement (18) aus einem Metall gefertigt ist.

5. Flachdichtung (1) nach einem der Ansprüche 1 bis 3, wobei das Funktionselement (18) aus einem Kunststoff gefertigt ist.

6. Flachdichtung (1) nach einem der Ansprüche 1 bis 5, wobei das Funktionselement (18) ein Verpressungselement ist.

7. Flachdichtung (1) nach einem der Ansprüche 1 bis 6, wobei die äußeren Oberflächen des Funktionselements (18) eine Oberflächenstruktur aufweisen.

## Claims

1. A flat seal (1) for high loads, comprising a metal support (2) which has a coating (4) made of an elastomeric material, in at least one predetermined region (14) of the flat seal one respective recess being formed in which a functional element (18) is inserted and the metal support (2) comprising an opening (10) to receive a fastening element, **characterised in that** the functional element (18) extends around the fastening opening (10) in a sector of 60°-120°, preferably 70°-110°, particularly preferably 90°, which is adjacent to the fastening opening (10).

2. The flat seal (1) according to Claim 1, the functional element (18) being adhesively bonded in the recess.

3. The flat seal (1) according to Claim 1, the functional element (18) being clamped in the recess.

4. The flat seal (1) according to one of Claims 1 to 3, the functional element (18) being manufactured from a metal.

5. The flat seal (1) according to one of Claims 1 to 3, the functional element (18) being manufactured from a plastics material.

6. The flat seal (1) according to one of Claims 1 to 5, the functional element (18) being a compression element.

7. The flat seal (1) according to one of Claims 1 to 6, the outer surfaces of the functional element (18) having a surface structure.

## Revendications

1. Joint plat (1) pour contraintes élevées, comprenant un support métallique (2) comportant un revêtement (4) en un matériau élastomère, un évidement étant formé dans au moins une région prédéterminée (14) du joint plat, évidement dans lequel est inséré un élément fonctionnel (18), et le support métallique (2) comportant une ouverture (10) pour l'admission d'un élément de fixation ; **caractérisé en ce que** l'élément fonctionnel (18) s'étend autour de l'ouverture de fixation (10), dans une plage de 60° à 120°, de préférence de 70° à 110° et mieux, de 90°, qui avoisine l'ouverture de fixation (10).

2. Joint plat selon la revendication 1, dans lequel l'élément fonctionnel (18) est collé dans l'évidement.

3. Joint plat (1) selon la revendication 1, dans lequel l'élément fonctionnel est coincé dans l'évidement.

4. Joint plat (1) selon l'une des revendications 1 à 3, dans lequel l'élément fonctionnel (18) est constitué d'un métal.

5. Joint plat (1) selon l'une des revendications 1 à 3, dans lequel l'élément fonctionnel (18) est constitué d'un plastique.

6. Joint plat (1) selon l'une des revendications 1 à 5, dans lequel l'élément fonctionnel (18) est un élément d'assemblage par pressage.

7. Joint plat (1) selon l'une des revendications 1 à 6, dans lequel les surfaces extérieures de l'élément fonctionnel (18) comportent une structure de surface.
